# EUROPEAN PATENT APPLICATION

(11) **EP 4 218 402 A1**
(43) Date of publication of application: **02.08.2023**
(21) Application number: 22275148.9
(22) Date of filing: 25.11.2022
(51) Int. Cl.: A01G 25/02

(54) **DRIPPER APPARATUS AND ASSOCIATED IRRIGATION SYSTEM FOR USE THEREWITH**

(30) Priority: 28.01.2022 GB 202201114
(71) Applicant: Irrigatia Limited, Near Selby, Yorkshire YO8 8NH (GB)
(72) Inventor: Mackay, Erick, Near Selby, YO8 8NH (GB); Evans, George, Near Selby, YO8 8NH (GB)
(74) Representative: Bailey Walsh & Co. LLP

(57) **Abstract**

The present invention provides a dripper apparatus for use with an irrigation system. The apparatus comprises an elongate shaft, having a first inlet end; a second, opposing outlet end; a filter section provided along a portion of the shaft, extending from the first, inlet end; a flow restriction section provided along a portion of the shaft, adjacent the filter section and extending partway toward the second, outlet end; a central bore extending within the shaft from the flow restriction section to the second, outlet end, defining an outlet aperture; and a conduit provided to ensure fluid communication between the flow restriction section and the central bore. The present invention also provides an irrigation system including one or more tube members having dripper apparatus at least partly received therein.

## Description

The invention to which this application relates is a dripper apparatus and associated irrigation system for use therewith.

Drip irrigation systems are commonly used or incorporated into garden watering systems and provide a convenient means by which to precisely water individual plants or plants grouped closely together in the garden. Such systems work by providing a network of pipes which may deliver water around a user's garden and at desired locations drippers may be connected to the pipes for strategic release of water directly at the base of the plant or group of plants. Drippers may be placed in containers, flower beds and borders, for shrubs and trees, grow bags and hanging baskets and the like. The drippers work by slowly and accurately releasing water to the root of a plant, providing the user with a greater level of control of the amount of water being delivered, significantly reducing water waste.

Drippers, however, are susceptible to blockages over time and due to their small size and intricate make-up, can be extremely difficult or impossible to properly clean. In particular, drippers are formed from multiple component parts - usually a two-part housing and a restrictor inside to ensure a steady flow rate through the dripper, which are pieced together prior to use. While this make-up does provide some advantages in the particular functionality of the dripper, it also has specific drawbacks as it is very common for particulates, dirt etc. within the water to enter the dripper and get lodged therein. The build-up of particulates ultimately impacts on the performance of the dripper. There is no filter mechanism to prevent the particles from entering the dripper, and once inside, it is often far easier for a user to simply replace the individual dripper than attempt to disassemble it, clean the parts out and reassemble it. Consequently, this also leads to a lot of unnecessary plastic waste.

It is therefore an aim of the present invention to provide an improved dripper apparatus which overcomes the above-mentioned problems associated with the prior art.

It is a further aim of the invention to provide an irrigation system which incorporates one or more dripper apparatus which overcome the above-mentioned problems associated with the prior art.

According to a first aspect of the invention there is provided a dripper apparatus for use with an irrigation system, said apparatus comprising an elongate shaft, having:
a first inlet end;
a second, opposing outlet end;
a filter section provided along a portion of the shaft, extending from the first, inlet end;
a flow restriction section provided along a portion of the shaft, adjacent the filter section and extending partway toward the second, outlet end;
a central bore extending within the shaft from the flow restriction section to the second, outlet end, defining an outlet aperture; and
a conduit provided to ensure fluid communication between the flow restriction section and the central bore.

Typically, the apparatus is arranged to permit liquid to pass through the filter and flow restriction sections, substantially along an outer surface of the shaft, and subsequently pass through the interior of the shaft via the central bore to the outlet aperture, wherein said conduit is provided to enable movement of liquid from the outer surface of the shaft to its interior, in use.

Preferably, the apparatus is formed as a single-piece, integral article.

The present invention therefore has the advantage that the apparatus provides a dripper having multiple sections ensuring that not only the flow of liquid along the dripper may be regulated, but also means are provided by which to filter any unwanted dirt or particulates from the liquid without ultimately affecting or fully blocking the flow of liquid to and out of the outlet aperture. In preferred embodiments, the dripper apparatus is provided as a single-piece, integral body, thereby ensuring there are no moving and/or fragile parts which are easily breakable, susceptible to accumulating particulates and thus blockage, and further, no assembly of the article is required.

Typically, the apparatus is arranged to be at least partially inserted into an open end of a tube member, in use. Preferably, the filter and flow restriction sections are arranged for insertion into an open end of a tube member, in use.

In one embodiment, the apparatus further includes a gripping portion, formed on the elongate shaft at or near the end of the flow restriction section nearest the second, outlet end. Typically, said gripping portion is provided to enable insertion and/or removal of the apparatus from an open end of a tube member, in use. In one embodiment, the gripping portion acts as a stopper means.

In one embodiment, a barb member may be formed on the shaft and located at or near the second, outlet end. The provision of a barb member serves to provide a distinct "drip point" at the end of the dripper apparatus, but which may also be used, where required, to attach the apparatus to a further tube member or seep hose member.

In one embodiment, said filter section includes one or more filtration stages. Typically, said one or more filtration stages are provided to filter dirt, particles, particulates from the liquid passing along the apparatus, in use. Further typically, said one or more filtration stages are provided to prevent the dirt, particles, particulates from entering the flow restriction section, in use.

In one embodiment, said filter section includes a first filter stage, located substantially at the first, inlet end of the shaft. Typically, second and further filter stages may be provided along the filter section of the shaft.

In one embodiment, first and further filter stages are arranged sequentially so as to filter smaller-sized particles and/or particulates within the liquid, in use. This thus ensures that by not providing a first filter stage which filters the smallest particles and/or particulates, larger particles and/or particulates do not immediately block the filter section. Instead, by providing filtration stages which in sequence are directed toward smaller particles and/or particulates, the first stage may be directed at the larger particles and/or particulates, the second stage may be directed to smaller particles and/or particulates, and third or further stages, where provided, may be directed to still smaller-sized particles and/or particulates, ensuring liquid may still flow through each stage and ultimate to the flow restriction section. The filter section thus provides an efficient means by which to protect the flow restriction section from being blocked by dirt particles and/or particulates, and allow liquid to flow through the flow restriction section uninhibited.

In one embodiment, the first stage of the filter section includes a plurality of teeth, spurs or other such formations formed on the shaft and extending radially outwardly therefrom. Typically, a plurality of gaps or troughs are thus formed between adjacent teeth, spurs or the like of the plurality of teeth, spurs or other such formations. Further typically, the size of the troughs or gaps formed between the teeth serves to filter out and/or prevent passage therethrough of particles and/or particulates sized larger than the gap or trough.

In one embodiment, second and further stages of the filter section, where provided, each include pluralities of teeth, spurs or other such formations, however, forming gaps or troughs of a size smaller than the preceding stage, thereby serving to filter out / prevent passage therethrough of smaller-sized particles and/or particulates.

In one embodiment, where two or more stages of the filter section are provided, the space between adjacent stages may increase sequentially between stages. For example, where three filtration stages are provided, the space between the first stage and the second stage may be of a first distance, and the space between the second and third stages may thus be of a second, larger distance. These spaces serve to function as a location where some filtered dirt, particles and/or particulates may be retained, ensuring the stages are not blocked and thus extending the amount of time between which the dripper apparatus requires servicing/cleaning.

In one embodiment, the shaft in the flow restriction section is formed having a radius greater than that of the shaft in the filter section. Typically, the radius of the shaft in the flow restriction section may be provided to be approximately equal to that of the shaft plus a plurality of teeth, spurs or other such formations in at least a first stage of the filter section.

Preferably, the flow restriction section includes an open channel formed in the surface of the shaft. Typically, said open channel extends from a first end of the flow restriction section, nearest the filter section, to a second end leading to the conduit. Thus, in use, liquid is permitted to flow through the channel and into the central bore and ultimately out through the outlet aperture, via the conduit.

In one embodiment, said channel is formed in a curved or zig-zag shape. Preferably, the channel is formed as a zig-zag shape. Such a shape is provided so as to maximise the length of the channel along the flow restriction section. By providing the channel in a zig-zag shape, this extends the length of liquid passage through the channel such that the largest cross-sectional area of the shaft may be utilised, thereby reducing the likelihood of blockage further while still regulating the flow of liquid therethrough. In some embodiments of the invention, the channel may be provided in the form of a screw thread. Typically, said screw thread is formed to extend around the circumference of the shaft, and along a portion of its length in the flow restriction section.

Typically, the flow restriction section, and in particular the channel provided therein, in use, ensures the flow of liquid therethrough is regulated. In some embodiments, said flow of liquid is regulated to between 6-8 mL/min at 0.2 bar, in use. In other embodiments, the flow rate and pressure may be varied further.

In one embodiment, said filter section and flow restriction section may be spaced apart on the shaft via the provision of a neck portion.

In one embodiment, the shaft further includes a rib member formed thereon. Typically, said rib member is located on the shaft between the conduit and a gripping portion of the apparatus.

Preferably, said rib member is provided as an annular rib member on the shaft. Typically, said rib member includes a raised portion with respect to the shaft in the flow restriction section, extending about the circumference thereof.

In one embodiment, at least one tube member is provided, and said filter and flow restriction sections of the shaft are provided to be inserted into an open end of the tube member, in use. Typically, said tube member is formed having an inner diameter substantially equal to or slightly less than the diameter of the shaft at the flow restriction section.

Therefore, in use, as the filter and flow restriction sections are inserted into the open end of the tube member, a substantially water-tight seal is created between the inner walls of the tube member and the outer surface of the shaft at the restriction section. The teeth, spurs or other such formations located in the one or more stages of the filter section may also extend to contact the inner walls of the tube member such that liquid flowing in the tube must pass through the gaps or troughs therebetween, ensuring it is filtered as desired. The open channel of the flow restriction section, once inserted into the tube member, becomes a closed channel through which the filtered liquid flows towards and through the conduit and into the central bore of the dripper apparatus. The provision of a rib member thus ensures that an additional sealing means may be provided between the shaft and the inner walls of the tube member, preventing water leakage from the tube member at the dripper apparatus interface. While the rib member is provided as an additional sealing means, the fit between it and the inner walls of the tube member is not so tight so as to prevent simple removal of the dripper apparatus, when required by a user.

Typically, the second, outlet end of the shaft extends away from an opposing side of the gripping portion to the filter and flow restriction sections. Further typically, a barb member may be provided at or near the outlet end. The provision of a barb member serves to provide a distinct "drip point" at the end of the dripper apparatus, but which may also be used, where required, to attach the apparatus to a further tube member or seep hose member. The dripper apparatus is easily removable from the tube member, for example via the use and gripping to the gripping portion, to enable quick and convenient cleaning, rinsing and unblocking of the filter and flow restriction sections.

In another aspect of the present invention, there is provided an irrigation system, said irrigation system including:
at least a first tube member, said tube member connected at a first end to a liquid source;
said tube member having at least a second end, said at least second end being an open end;
wherein a dripper apparatus as defined above is provided, at least part of which is received in said at least second end.

Typically, the filter section and flow restriction section of the shaft of the dripper apparatus is inserted into and received in the at least second end of the tube member.

In one embodiment, said tube member may be branched, having third and/or further ends. Typically, further dripper apparatus may be provided, at least part of which are in said third and/or further ends.

In one embodiment, said irrigation system may include second and further tube members, connected to the first tube member and forming a branched network of tube members. Typically, said branched network of tube members includes second, third and/or further open ends, in which are received at least part of further dripper apparatus.

Typically, said filter section provides a means to block and prevent dirt, particles and/or particulates in the liquid flowing through the tube member from reaching and inhibiting the flow restriction section.

Typically, insertion of the shaft of the dripper apparatus into at least the first tube member, and the subsequent seal created between the inner walls of the tube member and the outer surface of the flow restriction section creates a closed channel in the flow restriction section, through which a regulated flow of liquid may pass.

Typically, said dripper apparatus is removable from the tube-end thereby enabling cleaning and unblocking of the dripper apparatus by a user.

Typically, said dripper apparatus is formed as a single-piece integral article.

Embodiments of the present invention will now be described with reference to the accompanying figures, wherein:

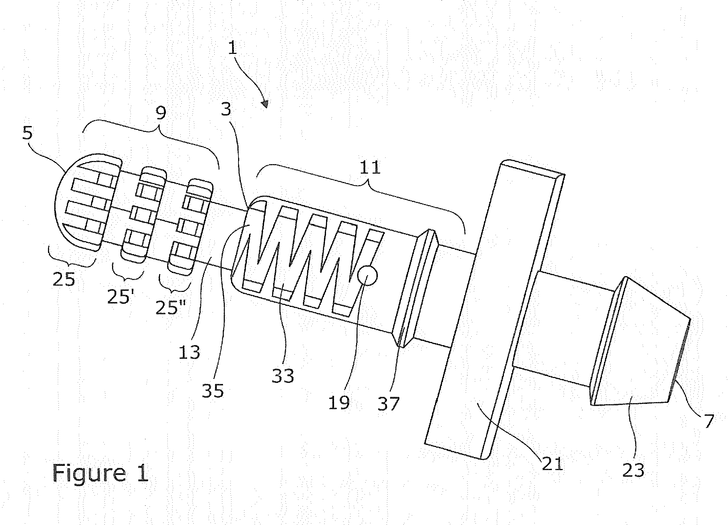

Figure 1 illustrates a plan view of a dripper apparatus, in accordance with an embodiment of the present invention;

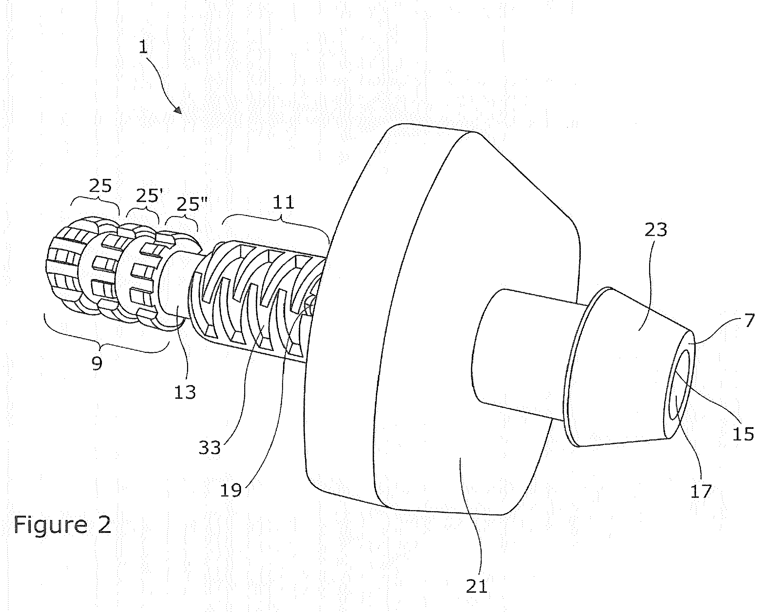

Figure 2 illustrates a first perspective view of a dripper apparatus, in accordance with an embodiment of the present invention;

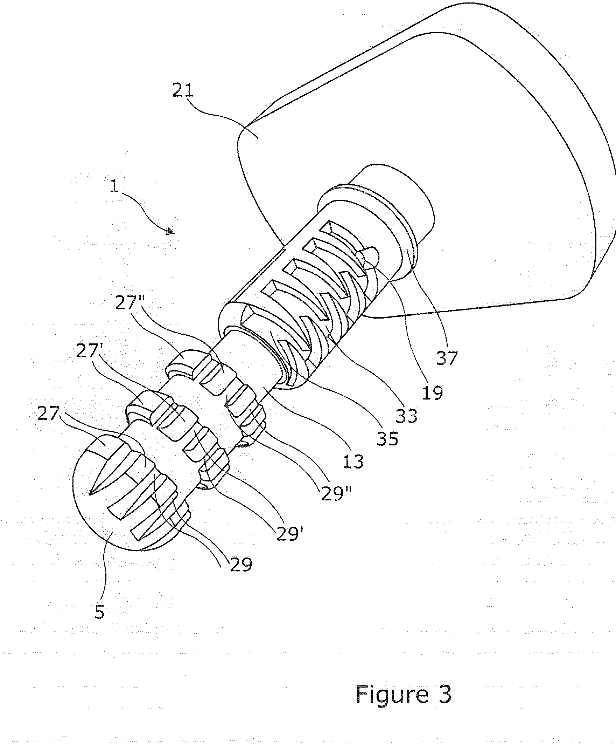

Figure 3 illustrates a second perspective view of a dripper apparatus, in accordance with an embodiment of the present invention;

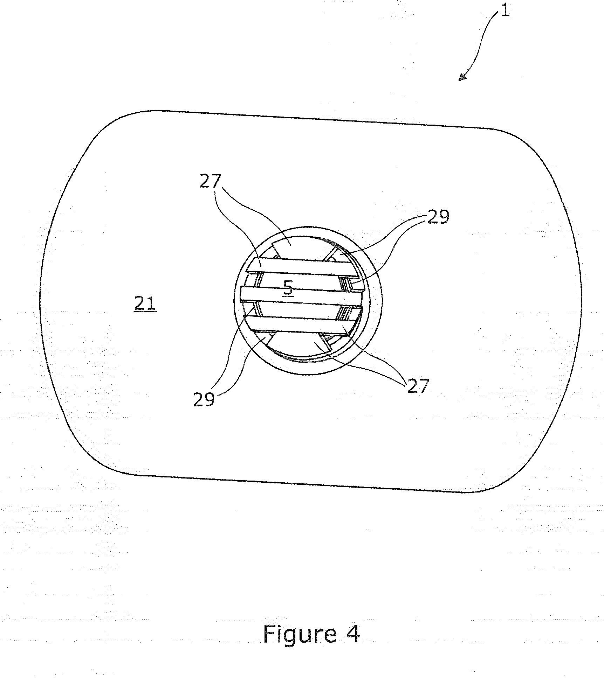

Figure 4 illustrates a first end view of a dripper apparatus, in accordance with an embodiment of the present invention; and

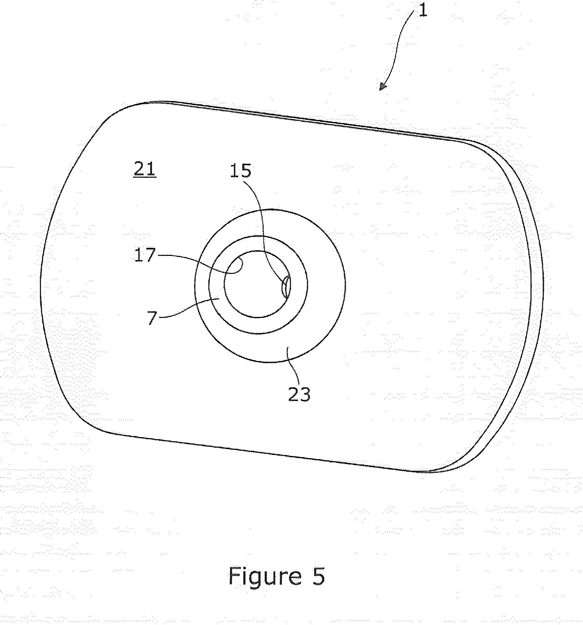

Figure 5 illustrates a second end view of a dripper apparatus, in accordance with an embodiment of the present invention.

Referring now to the Figures, there is shown a dripper apparatus 1 for use with an irrigation system, typically a domestic garden irrigation system, however, in some instances the dripper 1 may also be used in more commercial settings. The dripper 1 is a predominantly elongate body having a main shaft 3 extending the length of the dripper 1. The shaft 3 has a first end 5 which acts as an inlet end for the dripper 1, and extends to a second, opposing end 7 which forms an outlet for the dripper 1. Along the shaft 3 there are provided a number of sections of the dripper 1. A filter section 9 is formed along a portion of the shaft 3, extending from the first, inlet end 5. A flow restriction section 11 is provided along a portion of the shaft 3, located substantially adjacent the filter section 9 and extending partway towards the second, outlet end 7. The filter and flow restriction sections 9, 11 may in some embodiments be provided immediately next to one another, or in other embodiments, may be spaced apart via the provision of a neck portion 13. The shaft 3 further includes a central bore 15 extending within the shaft 3 from the flow restriction section 11 to the second, outlet end 7, and which defines an outlet opening 17 in the dripper 1. Connecting the interior end of the central bore 15 and the outlet-end of the flow restriction section 11 there is formed a conduit or hole 19, linking the flow restriction section 11 at an outer surface of the shaft, with the central bore 15 in the interior of the shaft. This ensures fluid communication along the length of the dripper 1 from the inlet end 5 to the outlet end 7. The dripper 1 is arranged to permit liquid, primarily in the form of water, to pass through the filter and flow restriction sections 9, 11, along an outer surface of the shaft 3 and subsequently pass through the interior of the shaft 3 via the central bore 15 to the outlet opening 17. The conduit or hole 19 is provided to enable movement of the water from the outer surface of the shaft 3 to its interior.

The dripper 1 is formed as a single-piece, integral article, and is particularly advantageous in that it comprises multiple sections ensuring that not only the regulated flow of water along and through the dripper 1, but also that any unwanted dirt, particles or particulates from the water can be effectively filtered without ultimately affecting or fully blocking the flow or passage of water to and out of the outlet opening 17. A further advantage of providing the dripper 1 as a single-piece, integral body, ensures that there are no moving and/or fragile parts which are easily breakable, susceptible to accumulating particulates and thus blockage, and further, no assembly of the dripper 1 is required.

The dripper 1 is formed to be partially inserted into an open end of a tube through which the water flows. That is to say the filter and flow restriction sections 9, 11 are formed to be inserted into the tube (not shown). A gripping portion in the form of a finger grip 21 is provided, located between the outlet end of the flow restriction section 11, and the outlet end 7. The finger grip 21 provides a convenient means by which a user may grip and insert/remove the dripper 1 to and from the open end of a tube. Further, the grip 21 serves to act as a stopper preventing full insertion of the dripper 1 into the tube. The outlet portion of the shaft 3 extends from the finger grip 21 to the outlet end 7, where the outlet opening 17 is located. At or near the opening, the outlet portion may be provided with a barb portion 23 form therearound. The barb 23 is provided so as to form a distinct "drip point" at the outlet of the dripper 1, but it may also be used, in some embodiments and where required, to attach the outlet 7 of the dripper 1 to a further tube or a seep hose, for example.

The filter section 9 of the dripper 1 is formed having one or more filtration stages 25. In the illustrated embodiment, three filtration stages 25, 25', 25" are provided, although it will be appreciated that depending on the specifications of each dripper 1, more or fewer filtration stages 25 may be provided. The filtration stages are provided, as mentioned above, to filter out and prevent unwanted dirt, particles and/or particulates within the water from passing through and blocking the dripper 1 or at least inhibiting the flow of water through the dripper 1. The first filer stage 25 is located at the first inlet end 5 of the shaft 3. Second and further stages 25', 25" are then located sequentially further along the shaft 3. Each stage 25 of the filter section 9 includes a plurality of teeth, spurs or other such formations 27 formed on and around the shaft 3 and which extend outwardly therefrom. Between each pair of adjacent teeth / spurs / formations 27 a gap or trough 29 is formed, such that a plurality of gaps or troughs 29 are provided on each stage of the filter section 9. The size of the troughs or gaps 29 formed between the teeth 27 serves to filter out and/or prevent passage therethrough of particles and/or particulates sized larger than the gaps or troughs 29 in that particular stage of the filter section 9. As mentioned, the second and third filtration stages 25', 25" and further stages where provided, also include pluralities of teeth / spurs 27', 27" and the like, consequently forming similar such gaps or troughs 29', 29". However, the gaps or troughs formed on the second and subsequent stages are of a smaller size than the preceding stage in the filter section 9, thereby serving to filter out / prevent passage therethrough of smaller-sized particles and/or particulates. Where multiple filtration stages 25 are provided, the spaces 26 between adjacent stages may, in some embodiments of the invention, increase sequentially between stages 25. That is to say, where the first and second stage 25, 25' may be spaced apart a first distance, the second and third stages 25' 25" may be spaced apart by a second, greater distance. These spaces 26 serve to function as particle collection reservoirs - locations where some filtered dirt, particles and/or particulates may be retained, ensuring the stages 25, 25', 25" are not blocked, thereby extending the amount of time between which the dripper 1 will require servicing / rinsing / cleaning.

The various stages 25 of the filter section 9 are arranged in a manner such that each successive stage 25 is designed to filter out increasingly smaller-sized particles and/or particulates from the water. This consequently ensures that the filtration is gradual yet effective, as opposed to providing an initial filtration stage designed to filter the smallest-sized particles immediately, such that it will most likely become blocked by those and large particles preventing any flow of water therethrough. Rather, by arranging multiple stages 25, 25', 25" in sequence, filtering out increasingly smaller particles and/or particulates, water is able to continue to flow through each stage and thus through the filter section 9 and on to the flow restriction section 11 of the dripper 1 uninhibited.

After the water has passed through the filter section 9, the flow of the water may then be regulated as it passes through the flow restriction section 11 of the dripper 1. The flow restriction section 11 is defined by the shaft 3 in that section having a radius greater than that in the filter section 9. In some embodiments, the radius of the shaft 3 in the flow restriction section may be approximately equal to that of the shaft 3 plus the distance by which the teeth / spurs 27 etc. extend from the shaft 3, in at least the first stage 25 of the filter section 9. While the flow restriction section 11 is located along the shaft 3 from and next to the filter section 9, in some embodiments the sections may be spaced apart on the shaft via the provision of the neck portion 13. The outer surface of the flow restriction section 11 includes an open channel 33 cut into the increased-radius shaft 3. The open channel 33 is formed to extend from an inlet point 35 of the flow restriction section 11, located at an end of that section nearest the filter section 9, to a second end at which is located the conduit or hole 19. Thus, the channel 33 permits water to flow therethrough and ultimately into the central bore 15, via the conduit 19 located at the second end of the channel 33. The channel 33 in the illustrated embodiments is shown having a zig-zag shape, cut into one side or segment of the surface of the shaft 3, although in other embodiments, other shapes may be utilised , such as a curve, S-shape or sine-wave shape. In some embodiments of the invention, the channel 33 may be provided in the form of a screw thread extending around the circumference of the shaft 3 and along a portion of its length in the flow restriction section 11. The zig-zag shape of the channel 33 is provided so as to maximise its length and ensure the largest cross-sectional area of the shaft 3 may be utilised, consequently extending the length of the water passage through the channel 33. This has the effect of reducing the likelihood of blockages further, while also still regulating the flow of water through the channel 33. In one embodiment, the channel 33 is provided to ensure that the flow of water therethrough is regulated to between 6-8 mL/min at 0.2 bar when in use, however, it will also be appreciated that the flow rate and pressure may be varied further depending on the specific requirements of the system and where it is located.

The shaft 3 further includes a rib 37 located between the conduit/hole 19 and the finger grip 21. The rib 37 constitutes a raised portion on the shaft 3 in the flow restriction section and extends around the circumference of the shaft 3 in an annular or ring-like fashion. The rib 37 provides an additional sealing feature as the filter and flow restriction sections of the shaft 3 are inserted into an open end of a tube for subsequent use. Typically, the tube in which the dripper 1 is inserted is formed having an inner diameter substantially equal to or slightly less than the diameter of the shaft 3 at the flow restriction section 11. Consequently, a substantially water-tight seal is created between the inner walls of the tube and the outer surface of the shaft 3 at the restriction section 11. The rib 37 then ensures that an additional sealing means is provided, preventing or at least substantially reducing water leakage. The teeth, spurs or other such formations 27 forming the stages 25 of the filter section 9 may also extend to contact the inner walls of the tube such that water flowing in the tube must pass through the gaps or troughs 29 therebetween, ensuring it is filtered as desired. The open channel 33 of the flow restriction section 11, once inserted into the tube, becomes a closed channel through which the filtered water flows towards and through the conduit 19 and into the central bore 15 of the dripper.

The present invention therefore provides a single-piece dripper 1 for an irrigation system which is simple to manufacture and requires no subsequent assembly by an end-user. Further the easy insertion and removal from a water tube, coupled with the exposed filter section and open channel, means that cleaning, rinsing and unblocking of the dripper 1 is simple and quick, unlike the vast majority of drippers currently available on the market. No intricate disassembly and subsequent reassembly is required for cleaning of the dripper, which also means the likelihood of disposal after one use is substantially reduced, thereby reducing waste overall. The present invention also provides an irrigation system which includes the dripper 1 being inserted, or at least partially inserted into the end of a tube - multiple drippers 1 may be provided for insertion into multiple ends of a branched network of tubes, thereby providing a more comprehensive irrigation system. The engagement between the dripper and the inner walls of the tube together combine to form the closed channel through which the water may flow, and upstream also create an efficient filtration stage, ensuring the water flow-path is not blocked and the drippers function properly, ensuring that plants etc. are watered at the precise rate as desired by a user.

## Claims

1. A dripper apparatus for use with an irrigation system, said apparatus comprising an elongate shaft, having:
a first inlet end;
a second, opposing outlet end;
a filter section provided along a portion of the shaft, extending from the first, inlet end;
a flow restriction section provided along a portion of the shaft, adjacent the filter section and extending partway toward the second, outlet end;
a central bore extending within the shaft from the flow restriction section to the second, outlet end, defining an outlet aperture; and
a conduit provided to ensure fluid communication between the flow restriction section and the central bore.

2. A dripper apparatus according to claim 1, wherein the apparatus is arranged to permit liquid to pass through the filter and flow restriction sections, substantially along an outer surface of the shaft, and subsequently pass through the interior of the shaft via the central bore to the outlet aperture, wherein said conduit is provided to enable movement of liquid from the outer surface of the shaft to its interior, in use.

3. A dripper apparatus according to claim 1, wherein the filter and flow restriction sections are arranged for insertion into an open end of a tube member, in use.

4. A dripper apparatus according to claim 1, wherein said filter section includes one or more filtration stages, said one or more filtration stages provided to filter dirt, particles, particulates from the liquid passing along the apparatus, and entering the flow restriction section, in use.

5. A dripper apparatus according to claim 4, wherein said filter section includes a first filter stage, located substantially at the first, inlet end of the shaft.

6. A dripper apparatus according to claim 5, wherein second and further filter stages are provided along the filter section of the shaft.

7. A dripper apparatus according to claim 4, wherein first and further filter stages are arranged sequentially so as to filter smaller-sized particles and/or particulates within the liquid, in use.

8. A dripper apparatus according to claim 5, wherein the first stage of the filter section includes a plurality of teeth, spurs or other such formations formed on the shaft and extending radially outwardly therefrom, and a plurality of gaps or troughs are thus formed between adjacent teeth, spurs or the like, of the plurality of teeth, spurs or other such formations.

9. A dripper apparatus according to claim 8, wherein second and further stages of the filter section, where provided, each include pluralities of teeth, spurs or other such formations, however, forming gaps or troughs of a size smaller than the preceding stage.

10. A dripper apparatus according to claim 1, wherein the flow restriction section includes an open channel formed in the surface of the shaft, extending from a first end of the flow restriction section, nearest the filter section, to a second end leading to the conduit.

11. A dripper apparatus according to claim 10, wherein said channel is formed in a curved or zig-zag shape, or in the form of a screw thread.

12. An irrigation system, said irrigation system including:
at least a first tube member, said tube member connected at a first end to a liquid source;
said tube member having at least a second end, said at least second end being an open end;
wherein a dripper apparatus as defined above is provided, at least part of which is received in said at least second end.

13. An irrigation system according to claim 12, wherein said tube member is branched, having third and/or further ends, and further dripper apparatus are provided, at least part of which are received in said third and/or further ends.

14. An irrigation system according to claim 12, wherein said irrigation system includes second and further tube members, connected to the first tube member and forming a branched network of tube members, said branched network of tube members including second, third and/or further open ends, in which are received at least part of further dripper apparatus.

15. An irrigation system according to claim 12, wherein insertion of the shaft of the dripper apparatus into at least the first tube member, and the subsequent seal created between the inner walls of the tube member and the outer surface of the flow restriction section creates a closed channel in the flow restriction section, through which a regulated flow of liquid may pass, in use.
